(19) **Europäisches Patentamt / European Patent Office / Office européen des brevets**

(11) **EP 4 394 643 B1**

(12) **EUROPEAN PATENT SPECIFICATION**

(45) Date of publication and mention
of the grant of the patent:
**29.07.2026  Bulletin 2026/31**

(21) Application number: **22860314.8**

(22) Date of filing: **16.08.2022**

(51) International Patent Classification (IPC):
**G06F 30/23** (2020.01)     **G01M 13/00** (2019.01)
**B64G 7/00** (2006.01)      **F16D 7/00** (2006.01)
**G01M 11/04** (2006.01)     **G06F 30/20** (2020.01)
**G06F 119/14** (2020.01)

(52) Cooperative Patent Classification (CPC):
**G06F 30/20; B64G 7/00; G01C 21/02; G01C 21/24;
G01M 11/04;** G06F 2119/14; Y02T 90/00

(86) International application number:
**PCT/CN2022/112709**

(87) International publication number:
**WO 2023/024968 (02.03.2023 Gazette 2023/09)**

(54) **VARIABLE-STROKE SELF-ADAPTIVE ADJUSTMENT QUASI-ZERO STIFFNESS DEVICE AND PARAMETER CHECKING METHOD**

SELBSTANPASSENDE VORRICHTUNG MIT VARIABLER HUBEINSTELLUNG FÜR
QUASI-NULLSTEIFIGKEIT UND PARAMETERPRÜFVERFAHREN

DISPOSITIF DE RIGIDITÉ QUASI-NULLE À AJUSTEMENT AUTO-ADAPTATIF À COURSE
VARIABLE ET PROCÉDÉ DE VÉRIFICATION DE PARAMÈTRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.08.2021  CN 202110978217**

(43) Date of publication of application:
**03.07.2024  Bulletin 2024/27**

(73) Proprietor: **Beijing Institute of Control
Engineering
Beijing 100086 (CN)**

(72) Inventors:
 • **YUAN, Li
  Beijing 100086 (CN)**
 • **WANG, Li
  Beijing 100086 (CN)**
 • **LI, Lin
  Beijing 100086 (CN)**
 • **WU, Yanpeng
  Beijing 100086 (CN)**

 • **ZHONG, Jun
  Beijing 100086 (CN)**
 • **ZHAO, Qin
  Beijing 100086 (CN)**
 • **ZHENG, Ran
  Beijing 100086 (CN)**
 • **QI, Jingya
  Beijing 100086 (CN)**
 • **ZHANG, Chengyu
  Beijing 100086 (CN)**

(74) Representative: **Petraz, Gilberto Luigi et al
GLP S.r.l.
Viale Europa Unita, 171
33100 Udine (IT)**

(56) References cited:
 CN-A- 102 650 563    CN-A- 105 253 333
 CN-A- 105 530 514    CN-A- 106 477 074
 CN-A- 108 801 574    CN-A- 109 540 493
 CN-A- 111 207 895    CN-A- 112 504 595
 CN-A- 112 504 595    CN-A- 113 919 190
 US-B1- 9 920 793

## Description

### FIELD

The present invention relate to a field of micro-vibration tests and experiments of spatial pointing measuring instruments with extremely high precision, in particular to a variable-stroke self-adaptive adjustment quasi-zero stiffness device and a parameter checking method of the same.

### BACKGROUND

As the core component for the spacecraft attitude pointing measurement and the spatial target pointing measurement, the spatial pointing measuring instrument can calculate the attitude information of the spacecraft or the pointing information of the spatial target by photoelectric imaging of stars or other spatial targets. The high-performance spacecraft requires the precision of the spatial pointing measuring instrument to be higher than 0.1 arc second, and the influence of the platform micro-vibration environment on the spatial pointing measuring instrument, which was neglected in the past, has attracted great attention.

The sensitive optical element in the pointing measuring instrument with the extremely high precision is slightly disturbed, which will produce a tiny deformation, a rigid body displacement and even a higher-order deformation, thus affecting the pointing accuracy of the optical axis of the pointing measuring instrument. At present, it is an effective means of detection and verification to study the micro-vibration problem of the pointing measuring instrument with the extremely high precision in the ground laboratory environment.

The existing low-stiffness micro-vibration test methods mainly include a suspension method and an air bearing method, and the present invention belongs to the suspension method. Most of the existing suspension methods use a flexible rope or an elastic rope to obtain the low stiffness environment needed for the micro-vibration test, but its stiffness is still large and it does not have the ability of variable-stroke adjustment and alignment. The closest related arts to the present invention are "A new spacecraft on-orbit ultra-clean weightlessness environment simulation test system (CN106477074)", "A satellite micro-vibration test multi-point suspension system and its design method (CN103482088A)" and "A device for testing influence of satellite platform micro-vibration on camera imaging (CN105530514A)", all of which provide a suspension device, with all the tested objects being suspended by the flexible rope or the elastic rope, so as to meet the low stiffness environment required by the test. However, the stiffness of these three design methods is still relatively large, these three design methods do not have the ability of displacement adjustment and direction adjustment and alignment, and they do not have the ability of adjustment and alignment and quasi-zero stiffness required by the micro-vibration test of the spatial pointing measuring instrument with the extremely high precision. Another example of optical test bench for testing embedded astronautical devices is described in CN112504595A.

Therefore, it is an urgent problem to design a simple, reliable, easy to operate, easy to mount and low-cost variable-stroke self-adaptive adjustment quasi-zero stiffness device and a parameter checking method of the same.

### SUMMARY

The present invention aims at overcoming the defects in the related art, and providing a variable-stroke self-adaptive adjustment quasi-zero stiffness device , according to claim 1, and a parameter checking method of the same, according to claim 8, which can comprehensively evaluate and quantitatively analyze the influence of a platform micro-vibration environment on a spatial pointing measuring instrument with an extremely high precision.

Embodiments of a first aspect of the present invention provide a variable-stroke self-adaptive adjustment quasi-zero stiffness device, which includes: an integrating sphere, a target, a collimator, a pointing measuring instrument, three disturbance sources, an inertia simulation tooling, a quasi-zero stiffness suspension adjustment device and an optical air-bearing platform. The integrating sphere, the target and the collimator are coaxially arranged on the optical air-bearing platform in sequence. The integrating sphere provides a light source, the target provides point target information, and the collimator simulates infinity. The pointing measuring instrument is an object to be tested, the inertia simulation tooling is a hollow cubic structure, and the pointing measuring instrument is connected and fixed with the inertia simulation tooling through a screw. Three disturbance sources are mounted on the inertia simulation tooling to provide small disturbance and inertia for the pointing measuring instrument. The quasi-zero stiffness suspension adjustment device suspends the inertia simulation tooling to provide a free boundary environment. The quasi-zero stiffness suspension adjustment device, the pointing measuring instrument, the disturbance sources and the inertia simulation tooling form a set of two-pendulum system as a whole.

Optionally, the inertia simulation tooling includes a mounting flange, and is connected with the pointing measuring instrument through the mounting flange, and a counterweight is mounted on a side surface of the inertia simulation tooling opposite to the pointing measuring instrument.

Optionally, after the inertia simulation tooling is suspended, the quasi-zero stiffness suspension adjustment device performs a direction adjustment of six degrees of freedom such that the pointing measuring instrument faces the collimator, wherein x, y and z are defined to represent three mutually perpendicular coordinate axis directions with a center of mass of the pointing measuring instrument as an origin, z is an optical axis direction, and U, V and W represent directions of degrees of freedom for rotation around the x, y and z axis directions, respectively.

Optionally, basic characteristic frequencies of the two-pendulum system are 0.114 Hz and 0.295 Hz, respectively.

Further, the three disturbance sources are mounted on three surfaces of the inertia simulation tooling, respectively, and normals of the three disturbance sources are perpendicular to each other.

Optionally, the quasi-zero stiffness suspension adjustment device includes: a suspension crown block, high-stiffness suspenders, a ⊟-shaped tooling, a high-modulus and high-stiffness spring, a double-stroke bolt assembly and a first suspension point. The ⊟-shaped tooling is arranged horizontally, with four second suspension points at four corners of its upper end face and four third suspension points at four corners of its lower end face. The four second suspension points are respectively connected to the suspension crown block through the high-stiffness suspenders, and the four third suspension points are respectively connected to upper ends of corresponding high-modulus and high-stiffness springs under the ⊟-shaped tooling through the high-stiffness suspenders. Lower ends of four high-modulus and high-stiffness springs each are connected with the first suspension point through the double-stroke bolt assembly.

Optionally, a top of the inertia simulation tooling includes four hooks, which are respectively connected with four first suspension points at a lower end of the quasi-zero stiffness suspension adjustment device; and the double-stroke bolt assembly includes a two-sided nut frame and two M16 high-strength bolts.

Embodiments of a second aspect of the present invention provide a parameter checking method of the variable-stroke self-adaptive adjustment quasi-zero stiffness device according to the embodiments of the first aspect of the present invention, which includes: checking a quasi-zero stiffness frequency, where according to the two-pendulum system formed by the quasi-zero stiffness suspension adjustment device, the pointing measuring instrument, the disturbance sources and the inertia simulation tooling as a whole, a dynamic equation of the two-pendulum system is established and solved to obtain a characteristic frequency of the variable-stroke self-adaptive adjustment quasi-zero stiffness device; checking a strength, where a shear stress of a spring wire is checked by a strength checking calculation formula of the high-modulus and high-stiffness spring; and checking an adjustment resolution, where an adjustment of the pointing measuring instrument in the U and V directions and a position adjustment of the target on a focal plane of the pointing measuring instrument are realized through the double-stroke bolt assembly.

Optionally, the dynamic equation of the two-pendulum system is established by a Lagrange equation method, and the equation is a second-order implicit differential equation set in two variables, and is solved by a Runge-Kutta numerical solution method to obtain the characteristic frequency of the device.

Specifically, the dynamic equation of the two-pendulum system is established by the Lagrange equation method as follows:

$$\begin{cases} L_1\ddot{\theta}_1 + \dfrac{m_2}{(m_1+m_2)}L_2\ddot{\theta}_2\cos(\theta_2-\theta_1) - \dfrac{m_2}{(m_1+m_2)}L_2\ddot{\theta}_2\sin(\theta_2-\theta_1) + g\sin\theta_1 = 0 \\ L_2\ddot{\theta}_2 + L_1\ddot{\theta}_1\cos(\theta_2-\theta_1) - L_1\ddot{\theta}_1\sin(\theta_2-\theta_1) + g\sin\theta_2 = 0 \end{cases}.$$

$L_1$ is a length of a first swing arm of the two-pendulum system, $L_2$ is a length of a second swing arm of the two-pendulum system, $m_1$ is an equivalent mass point of the first swing arm of the two-pendulum system, $m_2$ is an equivalent mass point of the second swing arm of the two-pendulum system, $g$ is a gravitational acceleration, $\theta_1$ is an included angle between the first swing arm and the gravitational acceleration g, and $\theta_2$ is an included angle between the second swing arm and the gravitational acceleration g; and two dots on $\theta_1$ and $\theta_2$ represent a second derivative.

An ode15i function in Matlab is used to solve the equation to obtain a result, and the result is subjected to a FFT analysis to determine whether the characteristic frequency caused by the two-pendulum system is close to zero stiffness and meets a quasi-zero stiffness condition.

A finite element analysis method is used to further check the quasi-zero stiffness frequency to determine whether its transverse characteristic frequency is consistent with a theoretical calculation result.

Optionally, the strength checking calculation formula of the spring is:

$$\tau_{max} = \mathrm{K}\frac{8\mathrm{CF}}{\pi d^2} \le [\tau].$$

K represents a compensation coefficient, C represents a winding ratio, F represents a force borne by the spring, d represents a wire diameter of the spring, $\tau_{max}$ represents an actual shear stress borne by the spring, and [τ] represents a

**EP 4 394 643 B1**

maximum allowable shear stress of the spring; when a calculation result is $\tau_{max} \le [\tau]$, it means that the selected spring meets a use requirement.

Optionally, checking the adjustment resolution specifically includes:

calculating the adjustment resolution, where the adjustment of the pointing measuring instrument in the U and V directions and the position adjustment of the target on the focal plane of the pointing measuring instrument are realized through the double-stroke bolt assembly.

The adjustment resolution is denoted as:

$$\Theta u = \frac{Zu}{L'} \cdot \frac{180°}{\pi}/3600.$$

Zu represents a pitch, L' represents an effective length of the pointing measuring instrument of the two-pendulum system in the optical axis direction, and the adjustment resolution $\Theta u$ is not be greater than 0.5'.

The target is adjusted to be within a field of view of the pointing measuring instrument through the double-stroke bolt assembly.

Compared with the related art, the present invention has the following beneficial effects.

(1) The method of the present invention provides the variable-stroke self-adaptive adjustment quasi-zero stiffness device and the parameter checking method of the same. The device is configured as the two-pendulum system, and the quasi-zero stiffness condition of the on-orbit free boundary condition can be simulated in the ground laboratory environment through the variable-stroke self-adaptive adjustment quasi-zero stiffness device.

(2) The present invention creatively realizes the adjustment of pitch and yaw attitudes when the pointing measuring instrument is suspended through the design of the variable-stroke and double-stroke adjustment bolt assembly, so that the alignment adjustment of the target on the focal plane of the pointing measuring instrument is more convenient, quick and easy to operate.

(3) The present invention checks and calculates the key parameters of the variable-stroke self-adaptive adjustment quasi-zero stiffness device, such as the quasi-zero stiffness, the strength and the adjustment resolution, so as to ensure that the design of the zero-stiffness device meets the requirements and that the index is reliable.

(4) The present invention has the advantages of a simple structure, an easy operation, a low cost and a high safety, and can comprehensively evaluate and quantitatively analyze the influence of the platform micro-vibration environment on the spatial pointing measuring instrument with the extremely high precision. It can lay a foundation for the engineering implementation and experimental verification of the spatial pointing measuring instrument with the extremely high precision.

**BRIEF DESCRIPTION OF THE DRAWINGS**

Fig. 1 is a schematic view of the present invention;
Fig. 2 is a schematic view of an inertia simulation tooling and a disturbance source in the present invention;
Fig. 3 is a schematic view of a variable-stroke self-adaptive adjustment quasi-zero stiffness device in the present invention;

Fig. 4 is a schematic view of a ⊟-shaped tooling and a suspension point in the present invention;
Fig. 5 is a schematic view of a double-stroke bolt assembly in the present invention;
Fig. 6 is a schematic view of a parameter definition of a two-pendulum system in the present invention; and
Fig. 7 is a schematic view of a theoretical solution value of a stiffness of a two-pendulum system in the present invention.

**DETAILED DESCRIPTION**

The present invention provides a variable-stroke self-adaptive adjustment quasi-zero stiffness device and a parameter checking method of the same. The device is configured as a two-pendulum system, and a quasi-zero stiffness condition of an on-orbit free boundary condition is simulated in a ground laboratory environment through the variable-stroke self-adaptive adjustment quasi-zero stiffness device. Through the design of a variable-stroke and double-stroke adjustment bolt, the adjustment of pitch and yaw attitudes is creatively realized when the pointing measuring instrument is suspended, so that the target is aligned in the focal plane of the pointing measuring instrument. At the same time, the key parameters of the zero stiffness device are effectively checked to ensure that the design of the zero stiffness device meets

4

the requirements and the indexes are reliable. The present invention can comprehensively evaluate and quantitatively analyze the influence of the platform micro-vibration environment on the spatial pointing measuring instrument with the extremely high precision.

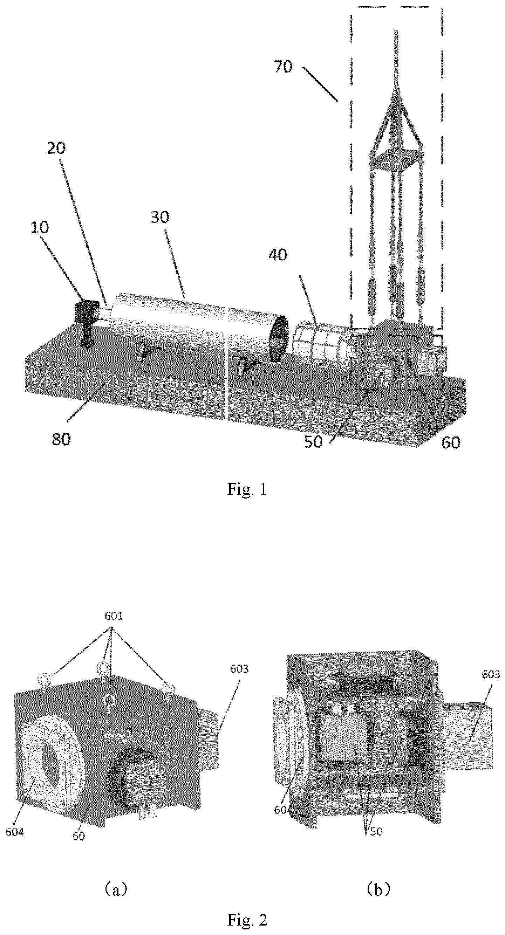

The present invention will be described in detail below with reference to Figs. 1 to 3 and specific embodiments.

As shown in Fig. 1, a variable-stroke self-adaptive adjustment quasi-zero stiffness device proposed by the present invention includes: an integrating sphere 10, a target 20, a collimator 30, a pointing measuring instrument 40, a disturbance source 50, an inertia simulation tooling 60, a quasi-zero stiffness suspension adjustment device 70 and an optical air-bearing platform 80.

The integrating sphere 10, the target 20 and the collimator 30 are coaxially mounted on the optical air-bearing platform 80 in sequence. The integrating sphere 10 provides a light source, the target 20 provides point target information, and the collimator 30 simulates infinity. The pointing measuring instrument 40 is an object to be tested, the inertia simulation tooling 60 has a hollow cubic structure, and the pointing measuring instrument 40 is connected and fixed with the inertia simulation tooling 60 through a screw. Three disturbance sources 50 are mounted on the inertia simulation tooling 60 to provide small disturbance and inertia for the pointing measuring instrument 40. The quasi-zero stiffness suspension adjustment device 70 suspends the inertia simulation tooling 60 to provide a free boundary environment. The quasi-zero stiffness suspension adjustment device 70, the pointing measuring instrument 40, the disturbance source 50 and the inertia simulation tooling 60 form a set of two-pendulum system as a whole. The basic characteristic frequencies of the two-pendulum system in the present invention are 0.114Hz and 0.295Hz, respectively.

As shown in Fig. 2, the inertia simulation tooling 60 is provided with a mounting flange 604, and is connected with the pointing measuring instrument 40 through the mounting flange 604, and a counterweight 603 is mounted on a side surface of the inertia simulation tooling 60 opposite to the pointing measuring instrument 40. The three disturbance sources 50 are respectively mounted on three surfaces of the inertia simulation tooling 60, and the normals of the three disturbance sources 50 are perpendicular to each other.

After the inertia simulation tooling 60 is suspended, the direction adjustment of six degrees of freedom of x, y, z, U, V and W is carried out by the quasi-zero stiffness suspension adjustment device 70, so that the pointing measuring instrument 40 faces the collimator 30, where x, y and z are defined to represent three mutually perpendicular coordinate axis directions with a center of mass of the pointing measuring instrument as an origin, z is an optical axis direction, and U, V and W respectively represent directions of degrees of freedom for rotation around the x, y and z axis directions.

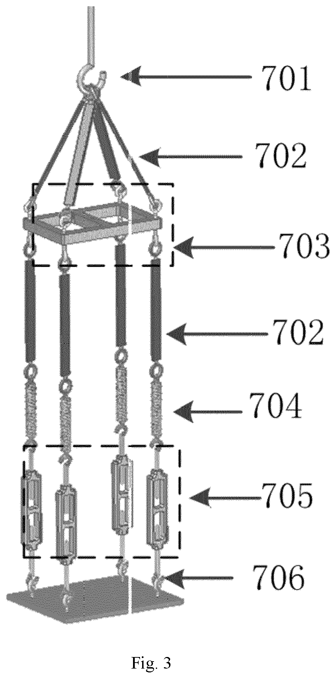

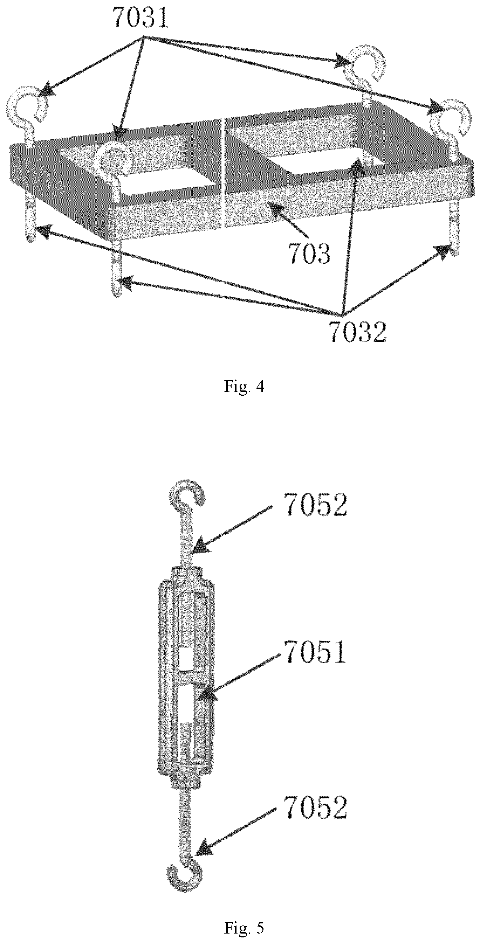

As shown in Fig. 3 and Fig. 4, the quasi-zero stiffness suspension adjustment device 70 includes a suspension crown block 701, high-stiffness suspenders 702, a 日-shaped tooling 703, a high-modulus and high-stiffness spring 704, a double-stroke bolt assembly 705 and a first suspension point 706. It should be noted that the word "日" is a Chinese character, and the phrase "日-shaped" means a shape like the Chinese character "日".

The -shaped tooling 703 is arranged horizontally, with four second suspension points 7031 at four corners of its upper end face and four third suspension points 7032 at four corners of its lower end face. The four second suspension points 7031 are respectively connected to the suspension crown block 701 through the high-stiffness suspenders 702, and the four third suspension points 7032 are respectively connected to upper ends of corresponding high-modulus and high-stiffness springs 704 under the 日-shaped tooling 703 through the high-stiffness suspenders 702. Lower ends of the four high-modulus and high-stiffness springs 704 are respectively connected to the first suspension points 706 through the double-stroke bolt assemblies 705.

The top of the inertia simulation tooling 60 is provided with four hooks 601, which are respectively connected with four first suspension points 706 at a lower end of the quasi-zero stiffness suspension adjustment device 70. The double-stroke bolt assembly 705 includes a two-sided nut frame 7051 and two M16 high-strength bolts 7052, as shown in Fig. 5.

The rated load of the suspension crown block 701 is not less than 5 tons, and the effective length of the wire rope of the crown block is not less than 30 meters. The rated load of the high-stiffness suspender 702 is 300 kilograms, and the effective length of the high-stiffness suspender 702 is 3 meters. The rated loads of suspension points 7031 and 7032 on upper and lower sides of the -shaped tooling 703 are 300 kilograms. The shear modulus of the high-modulus and high-stiffness spring 704 is not less than 78500 N/mm$^2$, and the ultimate tensile strength of the high-modulus and high-stiffness spring 704 is not less than 1500 MPa. The pitch of the threads of the double-stroke bolt assembly is 1 mm, that is, when the two-sided nut frame rotates by one circle, the stroke in the normal direction of the bolt diameter changes by 2 mm. The integrating sphere 10, the target 20 and the collimator 30 are coaxially mounted on the optical air-bearing platform 80 in sequence, so as to constitute the basic physical environment of the device. The integrating sphere 10 provides a light source, the target 20 provides the point target information, and the collimator 30 simulates the infinity. The pointing measuring instrument 40 is the object to be tested, the inertia simulation tooling 60 has the hollow cubic structure, and the pointing measuring instrument 40 is connected and fixed with the inertia simulation tooling 60 through the screw. Three disturbance sources 50 are mounted on the inertia simulation tooling 60 to provide the small disturbance and inertia for the pointing measuring instrument 40. The quasi-zero stiffness suspension adjustment device 70 suspends the inertia simulation tooling 60 to provide the free boundary environment. The quasi-zero stiffness suspension adjustment device 70, the pointing measuring instrument 40, the disturbance source 50 and the inertia simulation tooling 60 form a set of two-pendulum system as a whole, and the basic characteristic frequencies of the two-pendulum system are 0.114 Hz and 0.295 Hz, respectively. The direction adjustment of six degrees of freedom of the pointing measuring instrument 40 is realized by the quasi-zero stiffness suspension adjustment device 70, so that the center of the pointing measuring instrument 40 is aligned with the axis of the collimator 30.

The parameters of the high-modulus and high-stiffness spring 704 are as follows.

| Name of physical quantity | Value |
| --- | --- |
| Inner Diameter D1 | φ35mm |
| Middle Diameter D2 | φ40mm |
| Outer Diameter D | φ45mm |
| Wire Diameter d | φ5mm |
| Total Number of Turns N | 80 |
| Pitch p | 5mm |
| Free Height $H_0$ | 400mm |
| Shear Modulus of Carbon Spring Steel G | 78500N/mm$^2$ |
| Ultimate Tensile Strength of Carbon Spring Steel Wire $\sigma_b$ | ≥1320MPa |

The parameter checking is divided into quasi-zero stiffness checking and strength checking. The quasi-zero stiffness checking is to confirm that the designed device meets the quasi-zero stiffness condition and can meet the test requirements. The strength checking is to ensure the safety and reliability of the system, and avoid damages and potential safety hazards.

In the quasi-zero stiffness checking, a variable-stroke self-adaptive adjustment quasi-zero stiffness device is configured as a two-pendulum system, a dynamic equation of the two-pendulum system is established by the Lagrange equation method, and the equation is a second-order implicit differential equation set in two variables, and is solved by the Runge-Kutta numerical solution method to obtain the characteristic frequency of the device, that is, the stiffness value of the variable-stroke self-adaptive adjustment quasi-zero stiffness device.

The strength checking in the present invention mainly lies in the strength checking of the high-modulus and high-stiffness spring to ensure safety, and the strength checking mainly uses the strength checking calculation formula of the spring to check the shear stress of the spring wire.

In the adjustment resolution calculation, the adjustment of the pointing measuring instrument in the U and V directions and the position adjustment of the target on the focal plane of the pointing measuring instrument are realized through the double-stroke bolt assembly.

Specifically, the parameter checking in the present invention includes three steps.

1. Quasi-zero stiffness frequency checking

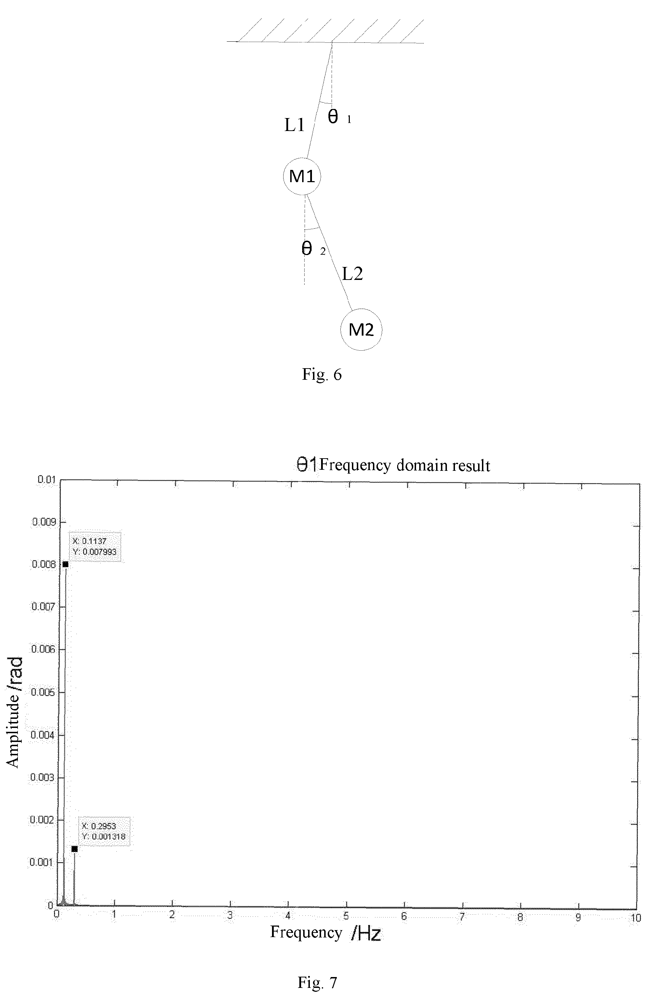

As shown in Fig. 6, in the present invention, the quasi-zero stiffness suspension adjustment device 70, the pointing measuring instrument 40, the disturbance source 50 and the inertia simulation tooling 60 are integrated into a set of two-pendulum system. If the quasi-zero stiffness suspension adjustment device 70 is regarded as a concentrated mass M1, and the pointing measuring instrument 40, the disturbance source 50 and the inertia simulation tooling 60 are regarded as another object M2, they form a two-pendulum system.

The Lagrange equation method is used to establish the dynamic equation of the two-pendulum system, and the equation is a second-order implicit differential equation set in two variables, and is solved by the Runge-Kutta numerical solution method to obtain the characteristic frequency of the device, that is, the stiffness value of the variable-stroke self-adaptive adjustment quasi-zero stiffness device.

The dynamic equation of the two-pendulum system can be obtained by the Lagrange equation method, as follows:

$$\begin{cases} L_1\ddot{\theta}_1 + \frac{m_2}{(m_1+m_2)}L_2\ddot{\theta}_2\cos(\theta_2-\theta_1) - \frac{m_2}{(m_1+m_2)}L_2\ddot{\theta}_2\sin(\theta_2-\theta_1) + gsin\theta_1 = 0 \\ L_2\ddot{\theta}_2 + L_1\ddot{\theta}_1\cos(\theta_2-\theta_1) - L_1\ddot{\theta}_1\sin(\theta_2-\theta_1) + gsin\theta_2 = 0 \end{cases}$$

$L_1$ is a length of a first swing arm of the two-pendulum system, $L_2$ *is* second swing arm of the two-pendulum system, $m_1$ is an equivalent mass point of the first swing arm of the two-pendulum system, $m_2$ is an equivalent mass point of the second swing arm of the two-pendulum system, $g$ is the gravitational acceleration, $\theta_1$ is an included angle between the first swing arm and the gravitational acceleration g, and $\theta_2$ is an included angle between the second swing arm and the gravitational acceleration g. Two dots on $\theta_1$ and $\theta_2$ represent a second derivative.

The ode15i function in Matlab is used to solve the equation, and the result is subjected to a Fast Fourier Transform (FFT) analysis. The characteristic frequencies caused by the two-pendulum system are 0.114 Hz and 0.295 Hz respectively, which are very close to zero stiffness and meet the quasi-zero stiffness condition, as shown in Fig. 7.

At the same time, the quasi-zero stiffness frequency is further checked by using the finite element analysis method, and the transverse characteristic frequencies are 0.13 Hz and 0.27 Hz respectively, which are consistent with the theoretical calculation results, thus proving the quasi-zero stiffness characteristics in the present invention again.

2. Strength checking

The strength checking in the present invention mainly lies in the strength checking of the high-modulus and high-stiffness spring to ensure safety, and the strength checking mainly uses the strength checking calculation formula of the spring to check the shear stress of the spring wire.

Common parameters of a cylindrical helical tension spring mainly include:

winding ratio: $C = D2/d = 8$, which generally has a value of 5~8;

effective laps: $N_c = N$

compensation coefficient: $K = \frac{4C-1}{4C-4} + \frac{0.615}{C} = 1.184$;

stiffness coefficient: $K_p = \frac{Gd^4}{8N_cD_2{}^3} = 1.228N/mm$, which is actually measured as 1.9 N/mm;

allowable shear stress: $[\tau] = 0.5\sigma_b = 660Mpa$.

For the tension spring, the strength checking mainly checks the shear stress of the spring wire, and the calculation formula for the strength checking of the spring is:

$$\tau_{max} = K\frac{8CF}{\pi d^2} \le [\tau].$$

K represents the compensation coefficient, C represents the winding ratio, F represents a force borne by the spring, d represents the wire diameter of the spring, and $\tau_{max}$ represents an actual shear stress borne by the spring, and $[\tau]$ represents the maximum allowable shear stress of the spring. When the calculation result is $\tau_{max} \le [\tau]$, it means that the selected spring meets the use requirements.

For example, it is assumed that the maximum load of each spring is one quarter of the whole machine mass, and the whole machine mass is not more than 110kg.

Each parameter is brought into the equation, and the calculation result is:

$\tau_{max} = 260MPa < \tau = Mpa$, high safety factor.

3. Adjustment resolution calculation

The adjustment of the pointing measuring instrument in the U and V directions and the position adjustment of the target in the focal plane of the pointing measuring instrument are realized by the double-stroke bolt assembly.

The adjustment resolution is denoted as:

$$\Theta u = \frac{Zu}{L'} \cdot \frac{180°}{\pi}/3600.$$

Zu represents the pitch, L' represents an effective length of the pointing measuring instrument of the two-pendulum system in the optical axis direction, and the adjustment resolution $\Theta u$ should not be greater than 0.5'.

The target is adjusted to be within the field of view of the pointing measuring instrument through the double-stroke bolt assembly.

For example, the M16 high-strength bolt is used as the double-stroke bolt, and its pitch is 1mm, that is, when the two-sided nut frame rotates by one circle, a change value at either end of the bolt is 2mm. Based on this, the adjustment resolution of a single turn is calculated as follows:

$$Z_u = 2\text{mm}$$

$$\theta_u = \frac{2}{420} * \frac{180}{\pi} = 0.23°$$
.

That is to say, the two-sided nut frame can move 2mm in the Z direction when rotating by one circle, and a corresponding angle is 0.23°. The resolution during actual operation and adjustment is far better than the above index. If a scale of a single turn is divided into 60 parts, then:

$$Z_u^{'} = 2/60 = 0.03\text{mm}$$

$$\theta_u^{'} = \frac{2}{420} * \frac{180}{\pi} / 60 * 60 = 0.23'$$
.

During the test, the target can be adjusted to be within the field of view of the pointing measuring instrument in a short time through the double-stroke bolt assembly.

The specific object involved in the present invention, i.e. the spatial pointing measuring instrument, may also be specifically space optical instruments, photoelectric instruments, and high-precision pointing measuring instruments, such as high-resolution space cameras and sky survey telescopes, which need to be subjected to the quasi-zero stiffness environment to simulate the micro-vibration test of the space instruments with free boundaries.

Parts of the present invention that are not described in detail belong to the common sense of those skill in the art.

## Claims

1.    A variable-stroke self-adaptive adjustment quasi-zero stiffness device, comprising an integrating sphere (10), a target (20), a collimator (30), a pointing measuring instrument (40), three disturbance sources (50), an inertia simulation tooling (60), a quasi-zero stiffness suspension adjustment device (70) and an optical air-bearing platform (80), wherein the integrating sphere (10), the target (20) and the collimator (30) are coaxially mounted on the optical air-bearing platform (80) in sequence; the integrating sphere (10) provides a light source, the target (20) provides point target information, and the collimator (30) simulates infinity; the pointing measuring instrument (40) is an object to be tested, the inertia simulation tooling (60) is a hollow cubic structure, and the pointing measuring instrument (40) is connected and fixed with the inertia simulation tooling (60) through a screw; the three disturbance sources (50) are mounted on the inertia simulation tooling (60) to provide small disturbance and inertia for the pointing measuring instrument (40); the quasi-zero stiffness suspension adjustment device (70) suspends the inertia simulation tooling (60) to provide a free boundary environment; and the quasi-zero stiffness suspension adjustment device (70), the pointing measuring instrument (40), the disturbance sources (50) and the inertia simulation tooling (60) form a set of two-pendulum system as a whole.

2.    The variable-stroke self-adaptive adjustment quasi-zero stiffness device according to claim 1, wherein the inertia simulation tooling (60) comprises a mounting flange (604), and is connected with the pointing measuring instrument (40) through the mounting flange (604), and a counterweight (603) is mounted on a side surface of the inertia simulation tooling (60) opposite to the pointing measuring instrument (40).

3.    The variable-stroke self-adaptive adjustment quasi-zero stiffness device according to claim 1 or 2, wherein after the inertia simulation tooling (60) is suspended, the quasi-zero stiffness suspension adjustment device (70) preforms a direction adjustment of six degrees of freedom (x, y, z, U, V, W) such that the pointing measuring instrument (40) faces the collimator (30), wherein x, y and z are defined to represent three mutually perpendicular coordinate axis directions with a center of mass of the pointing measuring instrument as an origin, z is an optical axis direction, and U, V and W represent directions of degrees of freedom for rotation around the x, y and z axis directions, respectively.

4. The variable-stroke self-adaptive adjustment quasi-zero stiffness device according to any one of claims 1 to 3, wherein basic characteristic frequencies of the two-pendulum system are 0.114 Hz and 0.295 Hz, respectively.

5. The variable-stroke self-adaptive adjustment quasi-zero stiffness device according to any one of claims 1 to 4, wherein the three disturbance sources (50) are mounted on three surfaces of the inertia simulation tooling (60), respectively, and normals of the three disturbance sources (50) are perpendicular to each other.

6. The variable-stroke self-adaptive adjustment quasi-zero stiffness device according to any one of claims 1 to 5, wherein the quasi-zero stiffness suspension adjustment device (70) comprises: a suspension crown block (701), high-stiffness suspenders (702), a ⊟-shaped tooling (703), a high-modulus and high-stiffness spring (704), a double-stroke bolt assembly (705) and a first suspension point (706);

   wherein the ⊟-shaped tooling (703) is arranged horizontally, with four second suspension points (7031) at four corners of its upper end face and four third suspension points (7032) at four corners of its lower end face; the four second suspension points (7031) are respectively connected to the suspension crown block (701) through the high-stiffness suspenders (702), and the four third suspension points (7032) are respectively connected to upper ends of corresponding high-modulus and high-stiffness springs (704) under the ⊟-shaped tooling (703) through the high-stiffness suspenders (702); and lower ends of four high-modulus and high-stiffness springs (704) each are connected with the first suspension point (706) through the double-stroke bolt assembly (705).

7. The variable-stroke self-adaptive adjustment quasi-zero stiffness device according to claim 6, wherein a top of the inertia simulation tooling (60) comprises four hooks (601), which are respectively connected with four first suspension points (706) at a lower end of the quasi-zero stiffness suspension adjustment device (70); and the double-stroke bolt assembly (705) comprises a two-sided nut frame (7051) and two M16 high-strength bolts (7052).

8. A parameter checking method of a variable-stroke self-adaptive adjustment quasi-zero stiffness device according to any one of claims 1 to 7, comprising:

   checking a quasi-zero stiffness frequency, wherein according to the two-pendulum system formed by the quasi-zero stiffness suspension adjustment device, the pointing measuring instrument, the disturbance sources and the inertia simulation tooling as a whole, a dynamic equation of the two-pendulum system is established and solved to obtain a characteristic frequency of the variable-stroke self-adaptive adjustment quasi-zero stiffness device;
   checking a strength, wherein a shear stress of a spring wire is checked by a strength checking calculation formula of the high-modulus and high-stiffness spring; and
   checking an adjustment resolution, wherein an adjustment of the pointing measuring instrument in the U and V directions and a position adjustment of the target on a focal plane of the pointing measuring instrument are realized through the double-stroke bolt assembly.

9. The parameter checking method of the variable-stroke self-adaptive adjustment quasi-zero stiffness device according to claim 8, wherein the dynamic equation of the two-pendulum system is established by a Lagrange equation method, and the equation is a second-order implicit differential equation set in two variables, and is solved by a Runge-Kutta numerical solution method to obtain the characteristic frequency of the device,

   wherein the dynamic equation of the two-pendulum system is established by the Lagrange equation method as follows:

$$\begin{cases} L_1\ddot{\theta}_1 + \dfrac{m_2}{(m_1+m_2)}L_2\ddot{\theta}_2\cos(\theta_2-\theta_1) - \dfrac{m_2}{(m_1+m_2)}L_2\ddot{\theta}_2\sin(\theta_2-\theta_1) + g\sin\theta_1 = 0 \\ L_2\ddot{\theta}_2 + L_1\ddot{\theta}_1\cos(\theta_2-\theta_1) - L_1\ddot{\theta}_1\sin(\theta_2-\theta_1) + g\sin\theta_2 = 0 \end{cases}$$

   wherein, $L_1$ is a length of a first swing arm of the two-pendulum system, $L_2$ is a length of a second swing arm of the two-pendulum system, $m_1$ is an equivalent mass point of the first swing arm of the two-pendulum system, $m_2$ is an equivalent mass point of the second swing arm of the two-pendulum system, $g$ is a gravitational acceleration, $\theta_1$ is an included angle between the first swing arm and the gravitational acceleration g, and $\theta_2$ is an included angle between the second swing arm and the gravitational acceleration g; and two dots on $\theta_1$ and $\theta_2$ represent a second derivative;

an ode15i function in Matlab is used to solve the equation to obtain a result, and the result is subjected to a FFT analysis to determine whether the characteristic frequency caused by the two-pendulum system is close to zero stiffness and meets a quasi-zero stiffness condition; and

a finite element analysis method is used to further check the quasi-zero stiffness frequency to determine whether its transverse characteristic frequency is consistent with a theoretical calculation result.

10. The parameter checking method of the variable-stroke self-adaptive adjustment quasi-zero stiffness device according to claim 8 or 9, wherein the strength checking calculation formula of the spring being:

$$\tau_{max} = \mathrm{K}\frac{8\mathrm{CF}}{\pi d^2} \le [\tau],$$

wherein K represents a compensation coefficient, C represents a winding ratio, F represents a force borne by the spring, d represents a wire diameter of the spring, $\tau_{max}$ represents an actual shear stress borne by the spring, and $[\tau]$ represents a maximum allowable shear stress of the spring; when a calculation result is $\tau_{max} \le [\tau]$, it means that the selected spring meets a use requirement.

11. The parameter checking method of the variable-stroke self-adaptive adjustment quasi-zero stiffness device according to any one of claims 8 to 10, wherein checking the adjustment resolution specifically comprises:

calculating the adjustment resolution, wherein the adjustment of the pointing measuring instrument in the U and V directions and the position adjustment of the target on the focal plane of the pointing measuring instrument are realized through the double-stroke bolt assembly;

wherein the adjustment resolution is denoted as:

$$\Theta u = \frac{\mathrm{Zu}}{\mathrm{L}'} \cdot \frac{180°}{\pi}/3600,$$

wherein Zu represents a pitch, L' represents an effective length of the pointing measuring instrument of the two-pendulum system in the optical axis direction, and the adjustment resolution $\Theta u$ is not be greater than 0.5'; and wherein the target is adjusted to be within a field of view of the pointing measuring instrument through the double-stroke bolt assembly.

**Patentansprüche**

1. Quasi-Nullsteifigkeitsvorrichtung mit variablem Hub und selbstanpassender Einstellung, umfassend eine Ulbricht-Kugel (10), ein Ziel (20), einen Kollimator (30), ein Zeigermessinstrument (40), drei Störquellen (50), ein Trägheitssimulationswerkzeug (60), eine Quasi-Nullsteifigkeits-Aufhängungseinstellungsvorrichtung (70) und eine optische Luftlagerplattform (80),

worin die Ulbricht-Kugel (10), das Ziel (20) und der Kollimator (30) auf der optischen Luftlagerplattform (80) in Folge koaxial montiert sind; die Ulbricht-Kugel (10) eine Lichtquelle bereitstellt, das Ziel (20) Punktzielinformationen liefert und der Kollimator (30) Unendlichkeit simuliert; das Zeigermessinstrument (40) ein Objekt ist, das getestet werden soll, das Trägheitssimulationswerkzeug (60) eine hohle kubische Struktur ist, und das Zeigermessinstrument (40) mit dem Trägheitssimulationswerkzeug (60) über eine Schraube verbunden ist und daran fixiert ist; die drei Störquellen (50) am Trägheitssimulationswerkzeug (60) montiert sind, um geringe Störung und Trägheit für das Zeigermessinstrument (40) zu liefern; die Quasi-Nullsteifigkeits-Aufhängungseinstellungsvorrichtung (70) das Trägheitssimulationswerkzeug (60) aufhängt, um eine freie Randwertumgebung bereitzustellen; und die Quasi-Nullsteifigkeits-Aufhängungseinstellungsvorrichtung (70), das Zeigermessinstrument (40), die Störquellen (50) und das Trägheitssimulationswerkzeug (60) einen Satz eines Doppelpendelsystems als Ganzes bilden.

2. Quasi-Nullsteifigkeitsvorrichtung mit variablem Hub und selbstanpassender Einstellung nach Anspruch 1, worin das Trägheitssimulationswerkzeug (60) einen Montageflansch (604) umfasst, und mit dem Zeigermessinstrument (40) über den Montageflansch (604) verbunden ist, und ein Gegengewicht (603) an einer Seitenfläche des Trägheitssimulationswerkzeugs (60) montiert ist, die dem Zeigermessinstrument (40) entgegengesetzt ist.

3. Quasi-Nullsteifigkeitsvorrichtung mit variablem Hub und selbstanpassender Einstellung nach Anspruch 1 oder 2, worin, nachdem das Trägheitssimulationswerkzeug (60) aufgehängt ist, die Quasi-Nullsteifigkeits-Aufhängungseinstellungsvorrichtung (70) eine Richtungseinstellung von sechs Freiheitsgraden (x, y, z, U, V, W) derart durchführt, dass das Zeigermessinstrument (40) dem Kollimator (30) gegenübersteht, worin x, y und z definiert sind, um drei gegenseitig senkrechte Koordinatenachsenrichtungen mit einem Massenmittelpunkt des Zeigermessinstrumentes als Ursprung darzustellen, z eine optische Achsenrichtung ist, und U, V und W jeweils Richtungen von Freiheitsgraden für die Rotation um die x, y und z-Achsenrichtungen darstellen.

4. Quasi-Nullsteifigkeitsvorrichtung mit variablem Hub und selbstanpassender Einstellung nach einem der Ansprüche 1 bis 3, worin charakteristische Grundfrequenzen des Doppelpendelsystems jeweils 0.114 Hz und 0.295 Hz sind.

5. Quasi-Nullsteifigkeitsvorrichtung mit variablem Hub und selbstanpassender Einstellung nach einem der Ansprüche 1 bis 4, worin die drei Störquellen (50) jeweils an drei Flächen des Trägheitssimulationswerkzeugs (60) montiert sind, und Normalen der drei Störquellen (50) zueinander senkrecht sind.

6. Quasi-Nullsteifigkeitsvorrichtung mit variablem Hub und selbstanpassender Einstellung nach einem der Ansprüche 1 bis 5, worin die Quasi-Nullsteifigkeits-Aufhängungseinstellungsvorrichtung (70) umfasst: einen Aufhängungskronenblock (701), Hochsteifigkeitsaufhänger (702), ein ⊟˙-förmiges Werkzeug (703), eine Hochmodul- und Hochsteifigkeitsfeder (704), eine Doppelhub-Bolzenanordnung (705) und einen ersten Aufhängungspunkt (706);

worin das ⊟˙-förmige Werkzeug (703) horizontal angeordnet ist, mit vier zweiten Aufhängungspunkten (7031) an vier Ecken seiner oberen Endfläche und vier dritten Aufhängungspunkten (7032) an vier Ecken seiner unteren Endfläche; die vier zweiten Aufhängungspunkte (7031) mit dem Aufhängungskronenblock (701) jeweils durch die Hochsteifigkeitsaufhänger (702) verbunden sind, und die vier dritten Aufhängungspunkte (7032) jeweils mit oberen Enden von entsprechenden Hochmodul- und Hochsteifigkeitsfedern (704) unter dem ⊟˙-förmigen Werkzeug (703) über die Hochsteifigkeitsaufhänger (702) verbunden sind; und untere Enden von vier Hochmodulund Hochsteifigkeitsfedern (704) je mit dem ersten Aufhängungspunkt (706) über die Doppelhub-Bolzenanordnung (705) verbunden sind.

7. Quasi-Nullsteifigkeitsvorrichtung mit variablem Hub und selbstanpassender Einstellung nach Anspruch 6, worin ein Oberteil des Trägheitssimulationswerkzeugs (60) vier Haken (601) umfasst, die jeweils mit vier ersten Aufhängungspunkten (706) an einem unteren Ende der Quasi-Nullsteifigkeits-Aufhängungseinstellungsvorrichtung (70) verbunden sind; und die Doppelhub-Bolzenanordnung (705) einen zweiseitigen Mutterrahmen (7051) und zwei M16 Hochfestigkeitsbolzen (7052) umfasst.

8. Parameterprüfverfahren einer Quasi-Nullsteifigkeitsvorrichtung mit variablem Hub und selbstanpassender Einstellung nach einem der Ansprüche 1 bis 7, umfassend:

Prüfen einer Quasi-Nullsteifigkeitsfrequenz, worin nach dem Doppelpendelsystem, das von der Quasi-Nullsteifigkeits-Aufhängungseinstellungsvorrichtung, dem Zeigermessinstrument, den Störquellen und dem Trägheitssimulationswerkzeug als Ganzes gebildet ist, eine dynamische Gleichung des Doppelpendelsystems festgelegt und gelöst ist, um eine charakteristische Frequenz der Quasi-Nullsteifigkeitsvorrichtung mit variablem Hub und selbstanpassender Einstellung zu erhalten;
Prüfen einer Festigkeit, worin a Scherspannung eines Federdrahtes durch eine Festigkeitsprüfberechnungsformel der Hochmodul- und Hochsteifigkeitsfeder geprüft wird; und
Prüfen einer Einstellungsauflösung, worin eine Einstellung des Zeigermessinstrumentes in den U und V-Richtungen und eine Positionseinstellung des Ziels an einer Brennebene des Zeigermessinstrumentes durch die Doppelhub-Bolzenanordnung verwirklicht werden.

9. Parameterprüfverfahren der Quasi-Nullsteifigkeitsvorrichtung mit variablem Hub und selbstanpassender Einstellung nach Anspruch 8, worin die dynamische Gleichung des Doppelpendelsystems durch ein Lagrange-Gleichungsverfahren festgelegt ist, und die Gleichung eine implizite Differentialgleichung zweiter Ordnung ist, die in zwei Variablen gesetzt ist, und von einem Runge-Kutta numerischen Lösungsverfahren gelöst ist, um die charakteristische Frequenz der Vorrichtung zu erhalten,

worin die dynamische Gleichung des Doppelpendelsystems durch das Lagrange-Gleichungsverfahren wie folgt festgelegt ist:

$$\begin{cases} L_1 \ddot{\theta}_1 + \dfrac{m_2}{(m_1 + m_2)} L_2 \ddot{\theta}_2 \cos(\theta_2 - \theta_1) - \dfrac{m_2}{(m_1 + m_2)} L_2 \ddot{\theta}_2 \sin(\theta_2 - \theta_1) + g\sin\theta_1 = 0 \\ L_2 \ddot{\theta}_2 + L_1 \ddot{\theta}_1 \cos(\theta_2 - \theta_1) - L_1 \ddot{\theta}_1 \sin(\theta_2 - \theta_1) + g\sin\theta_2 = 0 \end{cases}$$

worin $L_1$ eine Länge eines ersten Schwingarmes des Doppelpendelsystems ist, $L_2$ eine Länge eines zweiten Schwingarmes des Doppelpendelsystems ist, $m_1$ ein äquivalenter Massenpunkt des ersten Schwingarmes des Doppelpendelsystems ist, $m_2$ ein äquivalenter Massenpunkt des zweiten Schwingarmes des Doppelpendelsystems ist, $g$ eine Gravitationsbeschleunigung ist, $\theta_1$ ein eingeschlossener Winkel zwischen dem ersten Schwingarm und der Gravitationsbeschleunigung g ist, und $\theta_2$ ein eingeschlossener Winkel zwischen dem zweiten Schwingarm und der Gravitationsbeschleunigung g ist; und zwei Punkte über $\theta_1$ und $\theta_2$ eine zweite Ableitung darstellen;

eine ode15i-Funktion in Matlab benutzt wird, um die Gleichung zu lösen, um ein Ergebnis zu erhalten, und das Ergebnis einer FFT-Analyse unterzogen wird, um zu bestimmen, ob die charakteristische Frequenz, die vom Doppelpendelsystem bewirkt ist, der Nullsteifigkeit nahe ist und eine Quasi-Nullsteifigkeitsbedingung erfüllt; und ein Finite-Elemente-Analyse-Verfahren benutzt wird, um die Quasi-Nullsteifigkeitsfrequenz weiter zu prüfen, um zu bestimmen, ob ihre querlaufende charakteristische Frequenz mit einem theoretischen Berechnungsergebnis übereinstimmt.

**10.** Parameterprüfverfahren der Quasi-Nullsteifigkeitsvorrichtung mit variablem Hub und selbstanpassender Einstellung nach Anspruch 8 oder 9, worin die Festigkeitsprüfberechnungsformel der Feder ist:

$$\tau_{max} = K \frac{8CF}{\pi d^2} \leq [\tau],$$

worin K einen Kompensationskoeffizienten darstellt, C ein Windungsverhältnis darstellt, F eine Kraft darstellt, die von der Feder getragen wird, d ein Drahtdurchmesser der Feder darstellt, $\tau_{max}$ eine tatsächliche Scherspannung darstellt, die von der Feder getragen wird, und $[\tau]$ eine höchstzulässige Scherspannung der Feder darstellt; wenn ein Berechnungsergebnis $\tau_{max} \leq [\tau]$ ist, bedeutet dies, dass die ausgewählte Feder eine Benutzungsanforderung erfüllt.

**11.** Parameterprüfverfahren der Quasi-Nullsteifigkeitsvorrichtung mit variablem Hub und selbstanpassender Einstellung nach einem der Ansprüche 8 bis 10, worin Prüfen der Einstellungsauflösung spezifisch umfasst:

Berechnen der Einstellungsauflösung, worin die Einstellung des Zeigermessinstrumentes in den U und V-Richtungen und die Positionseinstellung des Ziels an der Brennebene des Zeigermessinstrumentes durch die Doppelhub-Bolzenanordnung verwirklicht werden;
worin die Einstellungsauflösung als Folgendes bezeichnet ist:

$$\Theta u = \frac{Zu}{L'} \cdot \frac{180°}{\pi} / 3600,$$

worin Zu eine Steigung darstellt, L' eine effektive Länge des Zeigermessinstrumentes des Doppelpendelsystems in der optischen Achsenrichtung darstellt, und die Einstellungsauflösung $\Theta u$ nicht größer als 0.5' ist; und worin das Ziel so eingestellt ist, damit es sich innerhalb eines Gesichtsfeldes des Zeigermessinstrumentes durch die Doppelhub-Bolzenanordnung befindet.

**Revendications**

**1.** Dispositif de rigidité quasi nulle à ajustement auto-adaptatif à course variable, comprenant une sphère d'intégration (10), une cible (20), un collimateur (30), un instrument de mesure de pointage (40), trois sources de perturbation (50), un outillage de simulation d'inertie (60), un dispositif d'ajustement de suspension à rigidité quasi nulle (70) et une plate-forme optique à palier à air (80),
dans lequel la sphère d'intégration (10), la cible (20) et le collimateur (30) sont montés coaxialement sur la plate-forme optique à palier à air (80) en séquence ; la sphère d'intégration (10) fournit une source de lumière, la cible (20) fournit des informations de cible de point, et le collimateur (30) simule l'infini ; l'instrument de mesure de pointage (40) est un objet à tester, l'outillage de simulation d'inertie (60) est une structure cubique creuse, et l'instrument de mesure de pointage (40) est relié et fixé à l'outillage de simulation d'inertie (60) par l'intermédiaire d'une vis ; les trois sources de perturbation (50) sont montées sur l'outillage de simulation d'inertie (60) pour fournir une faible perturbation et une faible inertie à l'instrument de mesure de pointage (40) ; le dispositif d'ajustement de suspension à rigidité quasi nulle (70) suspend l'outillage de simulation d'inertie (60) pour fournir un environnement à limite libre ; et le dispositif d'ajustement de suspension à rigidité quasi nulle (70), l'instrument de mesure de pointage (40), les sources de perturbation (50) et l'outillage de simulation d'inertie (60) forment un ensemble de système à deux pendules dans sa globalité.

2. Dispositif de rigidité quasi nulle à ajustement auto-adaptatif à course variable selon la revendication 1, dans lequel l'outillage de simulation d'inertie (60) comprend une bride de montage (604), et est relié à l'instrument de mesure de pointage (40) par l'intermédiaire de la bride de montage (604), et un contrepoids (603) est monté sur une surface latérale de l'outillage de simulation d'inertie (60) opposée à l'instrument de mesure de pointage (40).

3. Dispositif de rigidité quasi nulle à ajustement auto-adaptatif à course variable selon la revendication 1 ou 2, dans lequel, après la suspension de l'outillage de simulation d'inertie (60), le dispositif d'ajustement de suspension de rigidité quasi nulle (70) préforme un ajustement de direction de six degrés de liberté (x, y, z, U, V, W) de sorte que l'instrument de mesure de pointage (40) fait face au collimateur (30), dans lequel x, y et z sont définis pour représenter trois directions d'axe de coordonnées mutuellement perpendiculaires avec un centre de masse de l'instrument de mesure de pointage comme origine, z est une direction d'axe optique, et U,V et W représentent des directions de degrés de liberté pour la rotation autour des directions d'axe x, y et z, respectivement.

4. Dispositif de rigidité quasi nulle à ajustement auto-adaptatif à course variable selon l'une quelconque des revendications 1 à 3, dans lequel les fréquences caractéristiques de base du système à deux pendules sont de 0.114 Hz et de 0.295 Hz, respectivement.

5. Dispositif de rigidité quasi nulle à ajustement auto-adaptatif à course variable selon l'une quelconque des revendications 1 à 4, dans lequel les trois sources de perturbation (50) sont montées sur trois surfaces de l'outillage de simulation d'inertie (60), respectivement, et les normales des trois sources de perturbation (50) sont perpendiculaires les unes aux autres.

6. Dispositif de rigidité quasi nulle à ajustement auto-adaptatif à course variable selon l'une quelconque des revendications 1 à 5, dans lequel le dispositif d'ajustement de suspension à rigidité quasi nulle (70) comprend :

un bloc de couronne de suspension (701), des dispositifs de suspension à rigidité élevée (702), un outillage de forme $\sqcap$ (703), un ressort à module élevé et à rigidité élevée (704), un ensemble de boulon à double course (705) et un premier point de suspension (706) ;

dans lequel l'outillage de forme $\sqcap$ (703) est agencé horizontalement, avec quatre deuxièmes points de suspension (7031) aux quatre coins de sa face d'extrémité supérieure et quatre troisièmes points de suspension (7032) aux quatre coins de sa face d'extrémité inférieure ; les quatre deuxièmes points de suspension (7031) sont respectivement reliés au bloc de couronne de suspension (701) par l'intermédiaire des éléments de suspension à rigidité élevée (702), et les quatre troisièmes points de suspension (7032) sont respectivement reliés aux extrémités supérieures des ressorts à module élevé et à rigidité élevée (704) correspondants sous l'outillage de forme $\sqcap$ (703) par l'intermédiaire des éléments de suspension à rigidité élevée (702) ; et des extrémités inférieures de quatre ressorts à module élevé et à rigidité élevée (704) sont chacune reliées au premier point de suspension (706) par l'intermédiaire de l'ensemble de boulon à double course (705).

7. Dispositif de rigidité quasi nulle à ajustement auto-adaptatif à course variable selon la revendication 6, dans lequel un haut de l'outillage de simulation d'inertie (60) comprend quatre crochets (601), qui sont respectivement reliés à quatre premiers points de suspension (706) au niveau d'une extrémité inférieure du dispositif d'ajustement de suspension à rigidité quasi nulle (70) ; et l'ensemble de boulon à double course (705) comprend un cadre d'écrou à double face (7051) et deux boulons à haute résistance M16 (7052).

8. Procédé de vérification de paramètres d'un dispositif de rigidité quasi nulle à ajustement auto-adaptatif à course variable selon l'une quelconque des revendications 1 à 7, comprenant :

la vérification d'une fréquence de rigidité quasi nulle, dans lequel, selon le système à deux pendules formé par le dispositif d'ajustement de suspension à rigidité quasi nulle, l'instrument de mesure de pointage, les sources de perturbation et l'outillage de simulation d'inertie dans son ensemble, une équation dynamique du système à deux pendules est établie et résolue pour obtenir une fréquence caractéristique du dispositif de rigidité quasi nulle à ajustement auto-adaptatif à course variable ;

la vérification d'une résistance, une contrainte de cisaillement d'un fil à ressort étant vérifiée par une formule de calcul de vérification de résistance du ressort à module élevé et à rigidité élevée ; et

la vérification d'une résolution d'ajustement, dans lequel un ajustement de l'instrument de mesure de pointage dans les directions U et V et un ajustement de position de la cible sur un plan focal de l'instrument de mesure de pointage sont réalisés à travers l'ensemble de boulon à double course.

9. Procédé de vérification de paramètres du dispositif de rigidité quasi nulle à ajustement auto-adaptatif à course variable selon la revendication 8, dans lequel l'équation dynamique du système à deux pendules est établie par un procédé d'équation de Lagrange, et l'équation est une équation différentielle implicite du deuxième ordre définie dans deux variables, et est résolue par un procédé de solution numérique de Runge-Kutta pour obtenir la fréquence caractéristique du dispositif,

dans lequel l'équation dynamique du système à deux pendules est établie par le procédé d'équation de Lagrange comme suit :

$$\begin{cases} L_1\ddot{\theta}_1 + \dfrac{m_2}{(m_1+m_2)}L_2\ddot{\theta}_2\cos(\theta_2-\theta_1) - \dfrac{m_2}{(m_1+m_2)}L_2\ddot{\theta}_2\sin(\theta_2-\theta_1) + g\sin\theta_1 = 0 \\ L_2\ddot{\theta}_2 + L_1\ddot{\theta}_1\cos(\theta_2-\theta_1) - L_1\ddot{\theta}_1\sin(\theta_2-\theta_1) + g\sin\theta_2 = 0 \end{cases}$$

où, $L_1$ est une longueur d'un premier bras oscillant du système à deux pendules, $L_2$ est une longueur d'un second bras oscillant du système à deux pendules, $m_1$ est un point de masse équivalent du premier bras oscillant du système à deux pendules, $m_2$ est un point de masse équivalent du second bras oscillant du système à deux pendules, $g$ est une accélération gravitationnelle, $\theta_1$ est un angle inclus entre le premier bras oscillant et l'accélération gravitationnelle g, et $\theta_2$ est un angle inclus entre le second bras oscillant et l'accélération gravitationnelle g ; et deux points sur $\theta_1$ et $\theta_2$ représentent une seconde dérivée ;

une fonction ode15i dans Matlab est utilisée pour résoudre l'équation pour obtenir un résultat, et le résultat est soumis à une analyse FFT pour déterminer si la fréquence caractéristique causée par le système à deux pendules est proche de la rigidité nulle et répond à une condition de rigidité quasi nulle ; et

un procédé d'analyse par éléments finis est utilisée pour vérifier davantage la fréquence de rigidité quasi nulle afin de déterminer si sa fréquence caractéristique transversale est compatible avec un résultat de calcul théorique.

10. Procédé de vérification de paramètres du dispositif de rigidité quasi nulle à ajustement auto-adaptatif à course variable selon la revendication 8 ou 9, dans lequel la formule de calcul de vérification de résistance du ressort est :

$$\tau_{max} = K\frac{8CF}{\pi d^2} \leq [\tau],$$

où K représente un coefficient de compensation, C représente un rapport d'enroulement, F représente une force supportée par le ressort, d représente un diamètre de fil du ressort, $\tau_{max}$ représente une contrainte de cisaillement réelle supportée par le ressort, et $[\tau]$ représente une contrainte de cisaillement maximale admissible du ressort ; lorsqu'un résultat de calcul est $\tau_{max} \leq [\tau]$, cela signifie que le ressort sélectionné répond à une exigence d'utilisation.

11. Procédé de vérification de paramètres du dispositif de rigidité quasi nulle à ajustement auto-adaptatif à course variable selon l'une quelconque des revendications 8 à 10, dans lequel la vérification de la résolution d'ajustement comprend spécifiquement :

le calcul de la résolution d'ajustement, dans lequel l'ajustement de l'instrument de mesure de pointage dans les directions U et V et l'ajustement de position de la cible sur le plan focal de l'instrument de mesure de pointage sont réalisés à travers l'ensemble de boulon à double course ;

dans lequel la résolution d'ajustement est indiquée par :

$$\Theta u = \frac{Zu}{L'} \cdot \frac{180°}{\pi} / 3600,$$

où Zu représente un pas, L' représente une longueur effective de l'instrument de mesure de pointage du système à deux pendules dans la direction d'axe optique, et la résolution d'ajustement $\Theta u$ n'est pas supérieure à 0.5' ; et dans lequel la cible est ajustée pour se trouver dans un champ de vision de l'instrument de mesure de pointage à travers l'ensemble de boulon à double course.

$$\Theta u = \frac{Zu}{L'} \cdot \frac{180°}{\pi} / 3600,$$

Fig. 1

（a）                                （b）

Fig. 2

701

702

703

702

704

705

706

Fig. 3

Fig. 4

Fig. 5

Fig. 6

θ1 Frequency domain result

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106477074
- CN 103482088 A
- CN 105530514 A
- CN 112504595 A